# EUROPÄISCHE PATENTSCHRIFT

(11) **EP 1 183 769 B1**
(45) Veröffentlichungstag und Bekanntmachung des Hinweises auf die Patenterteilung: **26.10.2005**
(21) Anmeldenummer: 01925366.5
(22) Anmeldetag: 02.03.2001
(51) Int. Cl.: H02K 21/22, H02K 7/18

(54) **STROMERZEUGEREINHEIT AUS ANTRIEBSMOTOR UND GENERATOR**
POWER GENERATING INSTALLATION THAT COMPRISES A DRIVE ENGINE AND A GENERATOR
UNITE DE PRODUCTION DE COURANT CONSTITUEE D'UN MOTEUR DE COMMANDE ET D'UN GENERATEUR

(30) Priorität: 02.03.2000 DE 10010248
(43) Veröffentlichungstag der Anmeldung: 06.03.2002
(73) Patentinhaber: Motorenfabrik Hatz GmbH & Co. KG, 94099 Ruhstorf (DE)
(72) Erfinder: HATZ, Ernst, 94099 Ruhstorf/Rott (DE); MOSER, Franz, A-4784 Schardenberg (AT)
(74) Vertreter: Grättinger & Partner (GbR)
(86) Internationale Anmeldenummer: PCT/EP2001/002369
(87) Internationale Veröffentlichungsnummer: WO 2001/065670

(56) Entgegenhaltungen:
- WO-A-91/00639
- GB-A- 2 328 476
- US-A- 5 041 749
- US-A- 5 936 320
- PATENT ABSTRACTS OF JAPAN vol. 1995, no. 04, 31. Mai 1995 (1995-05-31) & JP 07 001975 A (HONDA MOTOR CO LTD), 6. Januar 1995 (1995-01-06)

## Beschreibung

Die Erfindung betrifft eine Stromerzeugereinheit aus Dieselmotor und Synchrongenerator gemäß dem Oberbegriff von Anspruch 1.

In der deutschen Offenlegungsschrift 3009279 ist ein von einem Fahrzeugantriebssystem antreibbarer Generator beschrieben, wobei der Generator als heteropolarer Generator ausgeführt ist, dessen Rotor am Schwungrad des Antriebssystems befestigt ist, und wobei zum Erregen des Generators an dessen Stator Dauermagneten vorgesehen sind. Die Spannung wird dabei in einer Wicklung des Stators erzeugt, der um den Rotor herum am Gehäuse des Antriebssystems befestigt ist. Bei diesem mit dem Kraftfahrzeugmotor gebildeten Antriebssystem ergänzt der Rotor das Schwungrad des Motors. Dessen Kühlsystem dient indirekt auch der Kühlung des Generators.

An der bekannten Motor-Generator-Einheit ist nachteilig, daß sie einen großen Durchmesser in Anspruch nimmt, da ihr Rotor auf dem Außenumfang des Schwungrads aufgebaut ist; trotz des Zusammenbaus eines Motors und eines Generators wird eine bauliche Vereinfachung im Sinne einer Einsparung von Bauelementen nicht erzielt. Vielmehr handelt es sich um den Einbau eines Generators in das speziell angepaßte Getriebegehäuse eines Motors, welches in radialer Richtung entsprechend groß zu dimensionieren ist. Wegen des beschränkt vorhandenen Volumens im Inneren des Getriebegehäuses, insbesondere in axialer Richtung, ist die elektrische Leistung des Generators auf die Erfordernisse eines Bordnetzes an einem Kraftfahrzeug begrenzt.

Eine eingangs genannte Stromerzeugereinheit, die überdies mit einem Pumpenaggregat kombiniert ist, beschreibt die deutsche Patentschrift DE 19721527. Der an der Kurbelwelle befestigte Rotor des Generators bildet gleichzeitig das Schwungrad des Motors. Ein durch das Pumpenaggregat erzeugter Kühlmittelstrom bewirkt die Kühlung des Generators. Eine Motorkühlung ist nicht beschrieben.

Aus der Druckschrift WO 91/00639 ist zudem eine Einheit aus Kolbenmaschine und Ringgenerator bekannt, die eine separate, mit dem Rotor des Generators verbundene Schwungmasse aufweist.

Ferner ist in der Druckschrift US 5936320 ein motorgetriebener, speziell für Schweißarbeiten ausgestalteter Generator offenbart, dessen als Blechpaket ausgebildeter Rotor zur Generatorkühlung mit einzelnen Lüfterblättern ausgestattet ist, die mittels der das Blechpaket zusammenhaltenden Spannschrauben direkt am Rotor befestigt sind. Das Drehmoment des Motors wird über einen axial mittig an der Kurbelwelle angeordneten Bolzen auf den als Innenläufer ausgebildeten Rotor des Generators übertragen. Auch in den Druckschriften JP 07001975 und GB 2328476 A finden sich Motor-Generator-Einheiten, bei denen das Drehmoment des Motors direkt über die Kurbelwelle auf den Generator übertragen wird.

Aus der US-Patentschrift US 5041749 ist außerdem ein bürstenloser Gleichstrommotor bekannt, bei dem ein auf einer Rotorwelle angeordneter, innenlaufender Rotor als geblechtes Eisenpaket ausgebildet ist und die Rotorbleche durch Spannschrauben miteinander verspannt sind.

Demgegenüber liegt der vorliegenden Erfindung die Aufgabe zugrunde, bei einer eingangs genannten Stromerzeugereinheit in konstruktiver Hinsicht zu erreichen, daß durch deren Kombination Bauteile eingespart bzw. mehrfach genutzt werden können, daß damit Gewichtseinsparungen verbunden sind und daß das Bauvolumen des Generators sowohl radial als auch axial gering ist. Außerdem soll eine einfache Bauweise verwirklicht werden, bei welcher die mit der Kurbelwellendurchbiegung verbundenen Probleme behoben werden und bei welcher die Kühlung auf einfache Art ausgeführt ist.

Die vorstehende Aufgabe wird erfindungsgemäß durch das Kennzeichen von Anspruch 1 gelöst. Bei der erfindungsgemäßen Stromerzeugereinheit ist insbesondere
a) das Schwungrad des Dieselmotors ersetzt durch den Rotor des Generators, der wiederum an einem Lüfterrad angebaut ist, welches seinerseits stirnseitig an der Kurbelwelle des Antriebsmotors angeflanscht ist;
b) der Stator als geblechtes Eisenpaket ausgebildet, welches die Ankerwicklungen trägt;
c) der Rotor als geblechtes Eisenpaket ausgebildet, welches die Dauermagneten zur Erzeugung eines rotierenden Magnetfelds trägt;

Das Lüfterrad sorgt dabei effizient und platzsparend für die Kühlung sowohl des Generators als auch des Motors.

Die geblechte Ausführung von Rotor und Stator ermöglicht eine besonders volumensparende Bauweise des Generators.

Der als Außenläufer konzipierte Rotor des Generators ist vorteilhaft derart gestaltet, daß er das volle Trägheitsmoment des sonst motorseitig erforderlichen Schwungrads besitzt. Das bedeutet, daß einerseits der Rotor mit dem Massenträgheitsmoment eines sonst vorhandenen Schwungrads dimensioniert werden kann und daß andererseits für den Motor das jeweils erforderliche Trägheitsmoment, das ein Schwungrad z. B. zur Gewährleistung der Handstartfähigkeit des Motors üblicherweise liefert, zur Verfügung steht.

An einer derartigen Kombination aus Rotor und Schwungrad ist ferner vorteilhaft, daß sie problemlos die Lichtflimmergrenze einhält.

Wenn man davon ausgeht, daß ein Ziel der vorliegenden Erfindung darin besteht, daß die radiale Dimension des motorseitigen Gehäuseflansches durch den Anbau des Generatorgehäuses nicht überschritten werden soll, womit der Umfang des Rotors begrenzt ist, ergibt sich dessen axiale Dimension entweder nach dem für das Schwungrad benötigten Massenträgheitsmoment oder nach der für die Stromerzeugung erforderlichen elektrischen Auslegung des Generators. Dessen aktive magnetische Masse erfordert eine bestimmte Größe zur Magnetfelderzeugung im Generator.

Eine weitere Verkleinerung des Bauvolumens der Motor-Generator-Einheit ergibt sich noch dadurch, daß der Rotor an dem Lüfterrad des Motors direkt vorteilhaft innerhalb dessen die Beschaufelung tragenden Ringteils angebaut ist. Durch die damit gegebene Ausbildung des Rotors als Außenläufer mit relativ großem Durchmesser ergibt sich ein besonders hoher Nutzungsgrad des verbauten Volumens bei extrem kurzer axialer Baulänge.

Eine vorteilhafte Befestigung des Stators besteht darin, daß er mittels durch Bohrungen in seinem Blechpaket geführter, das Blechpaket zusammenspannender Statorschrauben mit einem Innenring des Generatorgehäusedeckels mehrfach am Umfang verschraubt ist. Besonders zweckmäßig ist dabei, daß die Statorschrauben zwischen Stator-Blechpaket und Innenring durch Distanzhülsen gesteckt und zwischen Innenring und der davon abgewandten Seite des Stators verspannt sind. Dadurch erübrigt sich eine aufwendige zentrale Lagerung des Stators z.B. auf einer Welle.

Ferner ist vorgesehen, daß der Rotor mittels durch Bohrungen in seinem Blechpaket geführte, das Blechpaket zusammenspannender Spannschrauben mit dem Lüfterrad innerhalb dessen die Beschaufelung tragenden Ringteils mehrfach am Umfang verschraubt ist. Besonders zweckmäßig ist dabei, daß die Spannschrauben zwischen Rotor-Blechpaket und Lüfterrad durch Stützhülsen gesteckt und zwischen Lüfterrad und der davon abgewandten Seite des Rotors verspannt sind.

Sowohl hinsichtlich des Rotors als auch des Stators wird damit eine besonders einfache Art der Befestigung bzw. Lagerung verwirklicht, womit erhebliche Kostenvorteile verbunden sind.

Bei einer kostensparenden Ausführungsform ist vorgesehen, daß dicht innerhalb des Zylindermantels des Generatorgehäuses mehrere am Umfang verteilt angeordnete, die gesamte Gehäuselänge durchspannende Befestigungsschrauben vorgesehen sind, welche einerseits mit einem motorseitigen Anschlußgehäuse, andererseits mit dem Generatorgehäusedeckel verschraubt sind.

Weitere Kosteneinsparungen ergeben sich durch eine besonders einfache Ausbildung des Generatorgehäuses als dünnwandiger Zylindermantel, bevorzugt aus Blech, wobei das Generatorgehäuse mit beiden Stirnflächen planflächig zwischen Anschlußgehäuse und Generatordeckel eingespannt ist.

Eine abflußseitige Schutzhaube des Generatorgehäusedeckels ist zweckmäßigerweise ebenfalls aus Blech gefertigt und mittels die Befestigungsschrauben für das Generatorgehäuse verlängernder Schraubbolzen am Generatorgehäusedeckel befestigt.

Im Inneren der Schutzhaube kann ein Drehmagnet als Spannungsregler vorgesehen sein. Dessen Joch, welches eine Erregerwicklung trägt, ist dabei vorteilhaft am Generatorgehäusedeckel befestigt. Im Falle einer elektronischen Spannungsregelung, die keinen nennenswerten Platz benötigt, kann eine besonders flach gestaltete Schutzhaube bei entsprechender Verkürzung des Generatorteils angebracht werden.

Mit der vorliegenden Erfindung ist es gelungen, eine Motor-Generator-Einheit zu schaffen, bei welcher auf Seiten des elektrotechnischen Teils für eine Nennleistung von z.B. ca. 10 KVA Kosteneinsparungen gegenüber herkömmlichen vergleichbaren Einheiten von bis zu 50 % möglich sind. Sie eignet sich insbesondere als Netzfrequenz-Stromerzeuger kleiner Leistung und geringer Baugröße.

Im folgenden wird ein Ausführungsbeispiel der Erfindung anhand der Zeichnung erläutert. Es zeigt
- Fig. 1: einen Axialschnitt durch eine Motor-Generator-Einheit gemäß Schnitt I-I der Fig. 2,
- Fig. 2: eine Ansicht auf den Stator und den Rotor der Motor-Generator-Einheit gemäß Schnitt II-II der Fig. 1,
- Fig. 3: zu Fig. 2 eine teilweise axiale Ansicht des Stators in vergrößerter Darstellung,
- Fig. 4: einen dreidimensionalen Ausschnitt des Rotors mit Dauermagneten und
- Fig. 5: eine Ansicht des Spannungsreglers gemäß Schnitt V-V der Fig. 1.

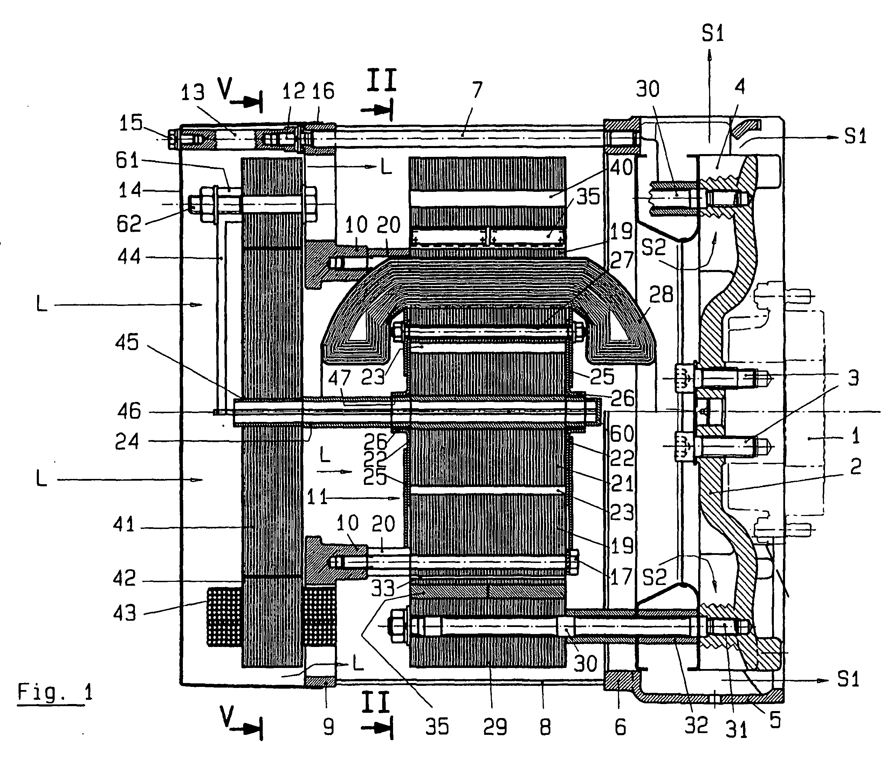

Die in den Fig. 1 bis 3 dargestellte einen Stromerzeuger bildende elektrische Maschine betrifft eine Einheit aus einem Antriebsmotor und einem Synchrongenerator. Als Antriebsmotor kommt bevorzugt ein Dieselmotor in Frage, von dem lediglich das anschlußseitige Ende seiner Kurbelwelle 1 strichliert gezeichnet ist. Stirnseitig an der Kurbelwelle 1 ist ein Lüfterrad 2 mittels Schrauben 3 angebaut. Das Lüfterrad 2 besitzt eine Beschaufelung 4 zur Erzeugung eines Luftstroms gemäß Pfeil S1 zur Motorkühlung, wobei die gemäß Pfeil S2 zuströmende Luft der aus dem Generatorgehäuse 8 abströmenden Kühlluft nach der Generatorkühlung entspricht. Wie in Fig. 1 dargestellt, besitzt der (strom-)abflußseitig vorgesehene Generatorgehäusedeckel 9 Ansaugöffnungen für die gemäß Pfeilen L zuströmende Kühlluft. Damit dieser Kühlluftstrom im Generatorgehäuse 8 seine volle Kühlwirkung erzielt, besitzt die Schutzhaube 14 eine oder mehrere (nicht gezeichnete) entsprechend dimensionierte Eintrittsöffnungen für die Kühlluft.

Ein motorseitiges Anschlußgehäuse 5 umschließt den Raum, in dem das Lüfterrad 2 untergebracht ist, radial nach außen; es ist beidseitig offen und besitzt auf seiner dem Motor gegenüberliegenden Seite einen Ringflansch 6 mit Gewindebohrungen zum Eindrehen von Befestigungsschrauben 7 für den Anschluß des zweckmäßig aus Blech gefertigten zylindrischen Generatorgehäuses 8, in dem dieses auf beiden Stirnseiten planflächig eingespannt wird. Die Befestigungsschrauben 7 sind an der Innenseite des Generatorgehäuses 8 anliegend über dessen Umfang verteilt angeordnet und durchspannen die gesamte Gehäuselänge. Am abflußseitigen, in der Zeichnung linken Ende des Generatorhäuses 8 ist ein Generatorgehäusedeckel 9 vorgesehen, welcher an radial nach innen ragenden Speichen einen Deckelinnenring 10 aufweist, an dem der Stator 11 des Generators befestigt ist. Mit ihren abflußseitigen Enden ragen die Schäfte der Befestigungsschrauben 7 durch Bohrungen in dem Generatorgehäusedeckel 9 hindurch; an ihren freien Gewindeenden 12 sind Schraubbolzen 13 aufgeschraubt, die der Befestigung des Generatorgehäuses 8 am Generatorgehäusedeckel 9 sowie der Schutzhaube 14 mittels kurzer Schrauben 15 dienen; diese werden von außen durch entsprechende Bohrungen in der Schutzhaube 14 in Gewindebohrungen der zugewandten Enden der Schraubbolzen 13 eingeschraubt. Die Schutzhaube 14 übergreift mit ihrem das offene Ende bildenden Randabschnitt 16 das zugeordnete freie Ende des Generatorgehäusedeckels 9 von außen.

Während über den Umfang verteilt gemäß dem vorliegenden Ausführungsbeispiel acht Befestigungsschrauben 7 vorgesehen sind, genügen zur Befestigung des Stators an dem Deckelinnenring 10 sechs Statorschrauben 17, welche durch Bohrungen des Blechpakets eines Statoraußenteils 19 hindurchgeführt sind und über Distanzhülsen 20 zwischen dem Deckelinnenring 10 und der zugewandten Seite des Statoraußenteils 19 mit dem Deckelring 10 verschraubt sind.

Der Statoraußenteil 19 wird auf diese Weise gehäusefest fixiert, wobei das den Statoraußenteil 19 bildende Blechpaket durch die Statorschrauben 17 zusammengespannt wird.

Das einen Statorinnenteil 21 bildende Blechpaket ist auf einer Hohlwelle 24 drehfest angeordnet. Die Hohlwelle 24 ist über ihre Endkappe 60 mit einem in der Wellenachse angeordneten, mit Vorspannung eingesetzten Torsionsstab 46 verbunden. Sie ist auf Lagerbuchsen 47 in Lagerflanschen 26 von Hüllblechen 22 verdrehbar gelagert, welche an gegenüberliegenden Stirnseiten des Blechpakets angeordnet sind. Das der Endkappe 60 gegenüberliegende Ende des Torsionsstabs 46 ist über eine stabfeste Stütze 44 gehäusefest fixiert. Deren Befestigungsauge 61 sitzt auf einer Schraube 62, welche das Blechpaket des Jocheisens 42 zusammenspannt. Die Hüllbleche 22 überdecken einen Steuerluftspalt 23 zwischen dem Statorinnenteil 21 und dem Statoraußenteil 19. Da somit das den Statorinnenteil 21 bildende Blechpaket drehfest auf der Hohlwelle 24 sitzt, macht es deren Verdrehung zum Zwecke der erwünschten Konstantregelung der Generatorspannung mit. Die Verstellung des Statorinnenteils 21 gegenüber dem Statoraußenteil 19 zum Zwecke der Spannungsregelung des Generators wird weiter unten noch im Detail beschrieben.

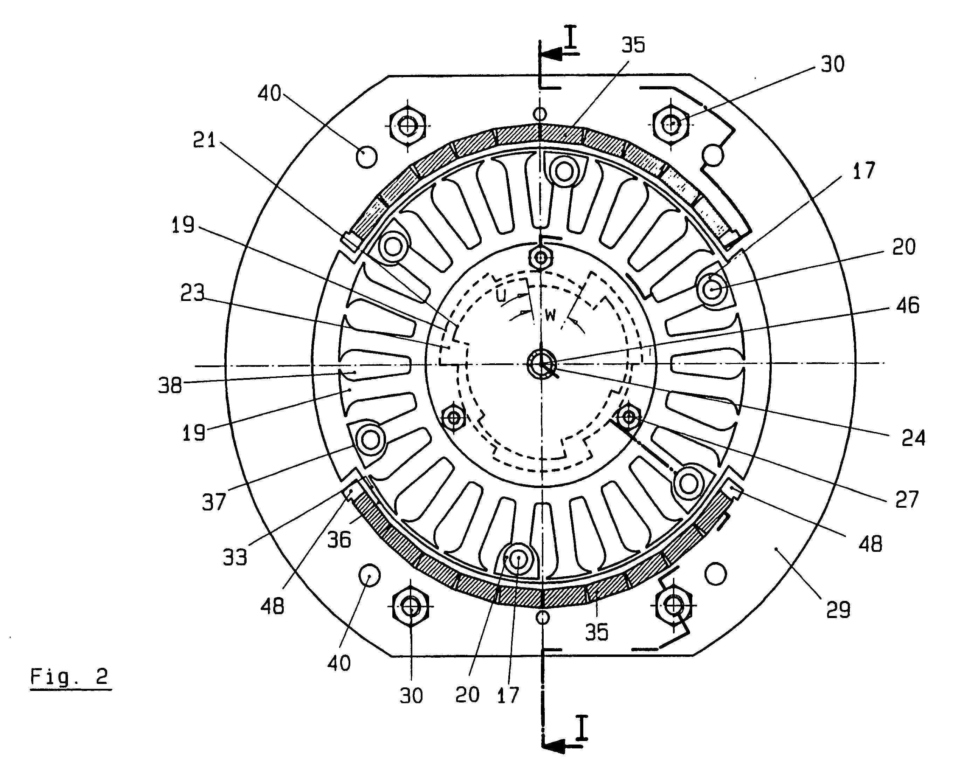

Die Ansicht gemäß Fig. 2 zeigt - ohne die in Fig. 1 dargestellte Isolierplatte 25, die zur Verbesserung der Ansicht weggelassen ist -, nicht nur die Kontur des den Rotor 29 bildenden Blechpakets, sondern auch diejenige der den Stator bildenden Blechpakete, welche im Bereich des Statoraußenteils 19 Ausschnitte 38 zur Aufnahme der Wicklungsstränge der Drehstromwicklung 28 des Generators aufweisen. Der Statoraußenteil 19 ist mittels durch Bohrungen 39 seines Blechpakets geführten Statorschrauben 17 an dem in Fig. 1 gezeigten Deckelinnenring 10 befestigt. Entsprechend der gewählten Schnittführung erkennt man auch die Distanzhülsen 20, welche das Blechpakte des Statoraußenteils 19 gegen den Deckelinnenring 10 abstützen.

Drei Halteschrauben 27 dienen der Zentrierung des Statorinnenteils 21 innerhalb des Statoraußenteils 19 mittels seitlicher Hüllbleche 22, in deren Lagerflanschen 26 die Hohlwelle 24 mit dem Blechpaket des Statorinnenteils 21 gelagert ist.

Die Hüllbleche 22 werden nach außen hin im Bereich des Steuerluftspalts 23 jeweils noch von einer Isolierplatte 25 überdeckt, welche der elektrischen Isolierung der Drehstromwicklung 28 des Generators sowie dreier am Umfang verteilt angeordneter Halteschrauben 27 gegenüber dem Hüllblech 22 dient. Die Halteschrauben 27 verlaufen durch Bohrungen in dem den Statoraußenteil 19 bildenden Blechpaket. Sie sind mittels Isolationshülsen gegen das Blechpaket isoliert und zentrieren über die Hüllbleche 22 den Statorinnenteil 21 gegenüber dem Statoraußenteil 19.

Der Stator 11 ist umgeben vom Rotor 29, welcher ebenfalls aus einem Blechpaket aufgebaut ist, welches mittels Spannschrauben 30 zusammengespannt wird, die mit einem motorseitigen Gewindeende 31 in entsprechende Gewindebohrungen des Lüfterrads 2 eingeschraubt sind. Zwischen Lüfterrad und der zugeordneten Seite des Rotors 29 sind auf die Spannschrauben 30 aufgeschobene Stützhülsen 32 eingespannt. Damit ist der Rotor 29 drehfest mit dem Lüfterrad 2 verbunden. An seinem Innenumfang bildet er einen schmalen ca. 2 mm breiten Luftspalt 33 gegenüber dem Stator 11. Außerdem besitzt der Rotor 29 in axialer Richtung durchgehende etwa zylinderförmig innerhalb zweier Polsegmente verlaufende Taschen 34, in welche von beiden Seiten Magnetelemente 35 in Form schmaler barrenförmiger Stäbe eingeschoben sind, und zwar im vorliegenden Beispiel, wie man aus Fig. 2 erkennt, je Pol zwei Reihen von jeweils zehn nebeneinander angeordneten Magnetelementen 35, welche für die magnetische Erregung des Generators verantwortlich sind. Im Bereich der Taschen 34 begrenzt die innere Konturlinie 36 der die Taschen 34 radial nach innen begrenzenden Umfangswand 50 des Rotors 29 zusammen mit der äußeren Konturlinie 37 des Stators 11 den schmalen Luftspalt 33. Bohrungen 40 in den Rotorblechen dienen für den Einbau eines (nicht gezeigten) Anlassers.

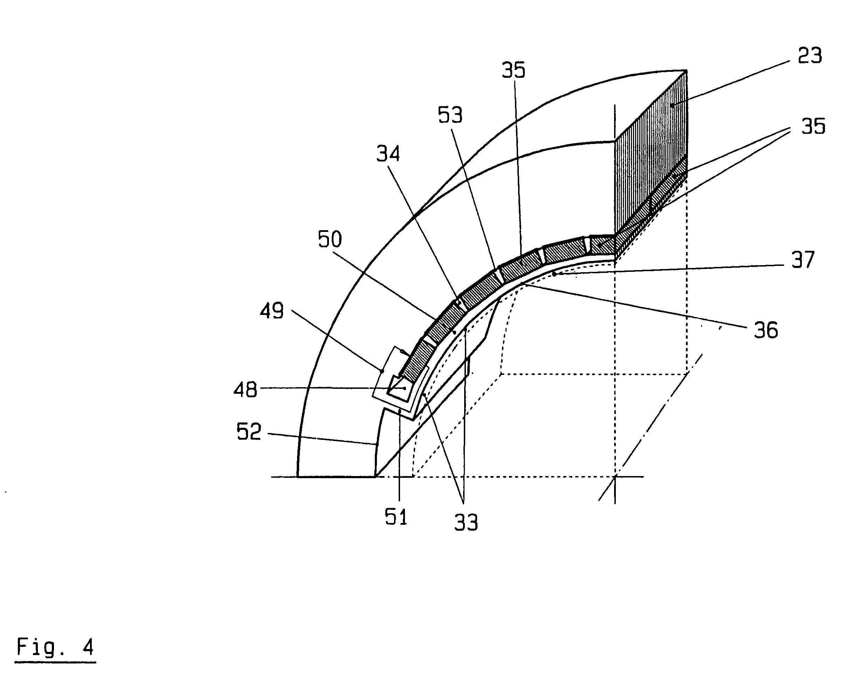

Gemäß Fig. 2 und 4 werden die Magnetelemente 35 axial in die Taschen 34 eingeschoben, so daß sie polygonartig verteilt dicht nebeneinander liegend die beiden Pole bilden. Durch die Unterteilung der Dauermagnete für die Pole in kleine Magnetelemente 35 wird deren kostengünstige Herstellung ermöglicht; deren Montage wird durch einen geeigneten magnetischen Rückschluß 49 sehr erleichtert, weil dadurch die gegenseitige Abstoßung benachbarter Magnetelemente 35 praktisch entfällt. Die einzelnen Magnetelemente 35 können in die Taschen 34 nahezu kraftlos eingeschoben werden. Dabei erübrigt sich eine besondere Befestigung der Magnetelemente 35, denn diese werden im Betrieb durch ihre Magnetkräfte in axialer Richtung gehalten und in den Taschen in radialer Richtung gesehen abgestützt, so daß sie den im Betrieb auftretenden Fliehkräften ohne weiteres standhalten.

In der räumlichen Darstellung der Magnetanordnung gemäß Fig. 4 ist am Ende des Ausschnitts, in dem die Magnetelemente 35 sitzen, ein Hohlraum 48 vorgesehen. Ohne diesen Hohlraum 48 würde im Falle eines Stoßkurzschlusses des Generators die außerordentlich hohe Flußdichte in diesem Bereich zur Ummagnetisierung und somit zur Zerstörung des äußeren Magnetelements 35 führen. Durch die Ausbildung des Hohlraums 48 mit einem definierten magnetischen Rückschluß 49 kann diese Ummagnetisierung vermieden werden. Der Hohlraum 48 ist gebildet durch eine Verlängerung der inneren Umfangswand 50 der Taschen 34 und einen an die benachbarte Pollücke 52 angrenzenden Brückensteg 51, durch den der magnetische Rückfluß 49 verläuft. Axial verlaufende Rippen 53 an den Innenseiten der Taschen 34 definieren die Abstände zwischen den Magnetelementen 35.

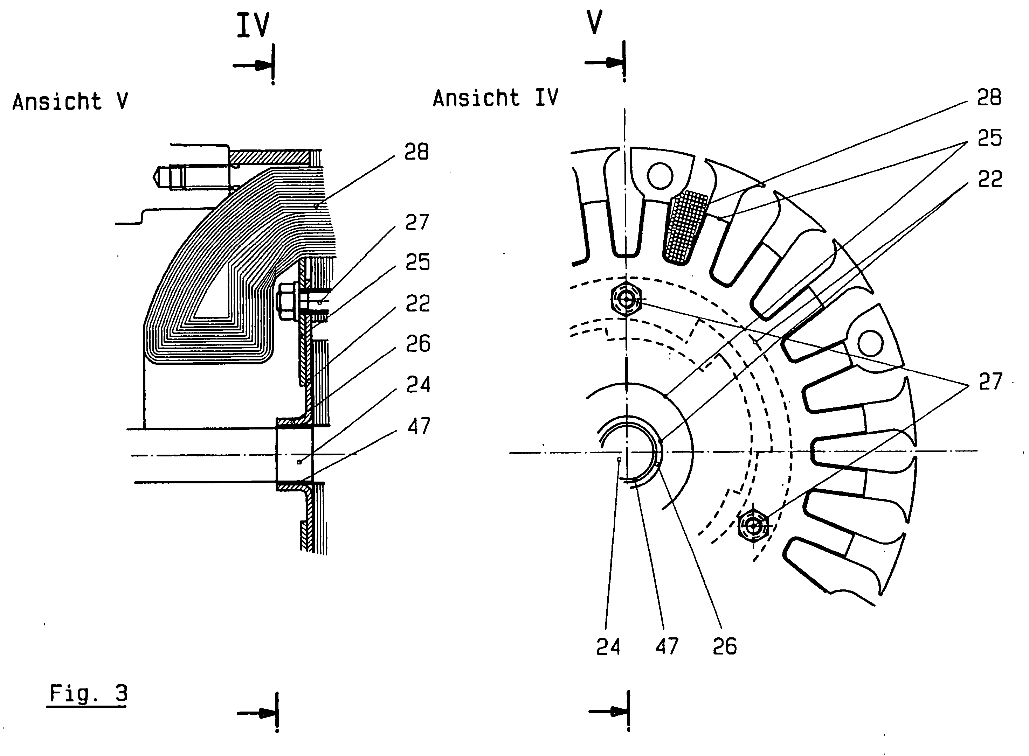

Fig. 3 stellt zur Verdeutlichung einen vergrößerten Ausschnitt von Fig. 2 dar, wobei übereinstimmende Teile mit denselben Bezugszeichen bezeichnet sind. Isolierplatte 25 und Hüllblech 22, welches der Positionierung des Statorinnenteils 21 dient, sind in Fig. 3 jeweils mit Bezugslinien an Außen- und Innenkontur angegeben. Die Lagerbuchse 47 ist stirnseitig dargestellt. In einem Ausschnitt 38 des Statoraußenteils 19 sind Wickeldrähte der Drehstromwicklung 28 im Schnitt gezeichnet.

Der veränderbare Steuerluftspalt 23 zwischen dem Statoraußenteil 19 und dem Statorinnenteil 21 ist wesentlich für das Funktionsprinzip der Spannungsregelung des Generators. Die an den Steuerluftspalt 23 angrenzenden Umfangsflächen des Statorinnenteils 21 einerseits und des Statoraußenteils 19 andererseits sind dreifach über den Umfang segmentiert ausgebildet, wobei die drei einzelnen Segmente etwa schraubenartig verlaufende, von der Kreisform abweichende vorspringende Umfangsabschnitte aufweisen. Beispielsweise verkleinert sich der Steuerluftspalt 23, wenn man ausgehend von der strichliert eingezeichneten Position den Statorinnenteil 21 gegenüber dem Statoraußenteil 19 in Richtung des Uhrzeigersinns gemäß Pfeil U (Fig. 2) verdreht, wobei die Endposition etwa bei einem Verdrehweg gemäß dem Winkel w erreicht ist. In dieser Endposition ist der Steuerluftspalt 23 am kleinsten.

Durch Verdrehen des Statorinnenteils 21 gegenüber dem Statoraußenteil 19 wird wie beschrieben die Geometrie des Steuerluftspalts 23 und damit der magnetische Widerstand im Stator 11 geändert. Dieser Umstand wird bei der vorliegenden permanent erregten Synchronmaschine zur Spannungsregelung verwendet. Durch die beschriebene Veränderung des magnetischen Flusses ist es möglich, die induzierte Spannung zu regeln, wobei eine direkte Proportionalität zwischen letzterer und dem magnetischen Fluß besteht. Dadurch, daß der Statorinnenteil 21 auf einer Hohlwelle 24 mit vorgespanntem Torsionsstab 46 sitzt, werden der Kraftwirkung des magnetischen Feldes auf den Statorinnenteil 21 entgegenwirkende Torsionskräfte mobilisiert, so daß die zum Zwecke der Spannungsregelung angewandte Verdrehung des Statorinnenteils 21 gegenüber dem Statoraußenteil 19 mittels eines Drehmagneten 41 nahezu kraftlos vonstatten geht. Dies setzt allerdings voraus, daß die Torsionsvorspannung der magnetischen Rückstellkraft angepaßt wird.

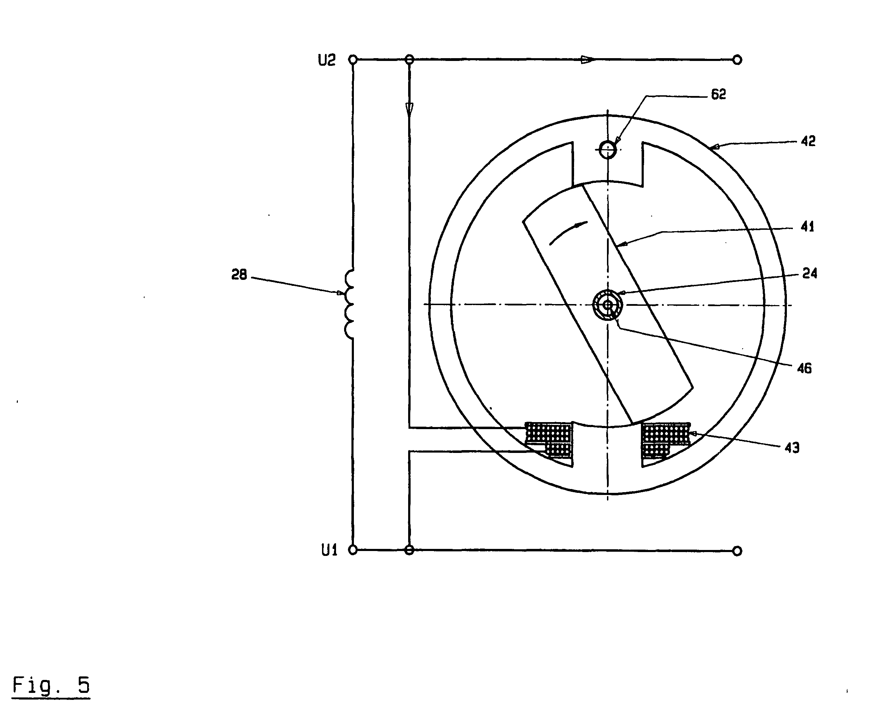

Der in den Fig. 1 und 5 dargestellte Drehmagnet 41 ist im Inneren eines Jocheisens 42 angeordnet, welches eine von der Generatorklemmenspannung gesteuerte Wicklung 43 trägt. Dabei führen Spannungsschwankungen an der Generatorwicklung zu einer Verdrehung des Drehmagneten 41 und bewirken somit durch eine Relativdrehung zwischen den beiden Statorteilen die gewünschte Konstantregelung der Spannung. Gemäß Fig. 1 ist der Drehmagnet 41 auf dem zugeordneten Ende der Hohlwelle 24 fliegend gelagert, welche wiederum drehfest mit dem Statorinnenteil 21 verbunden ist. Der Drehmagnet 41 sitzt zentrisch auf einem Lagerabschnitt 45 am Ende der Hohlwelle 24 und ist dort gegen eine Schulter der Hohlwelle 24 aufgepreßt. Bevorzugt sind der Drehmagnet 41 mit zugehörigem Joch 42 jeweils geblecht ausgebildet.

Gemäß Fig. 5 ist noch die elektrische Schaltung zur Betätigung des Drehmagneten 41 gezeichnet. Die an einem der Pole des Jocheisens 42 angebrachte Wicklung 43 liegt an der Klemmenspannung U1, U2 der Generatorwicklung 28 an. Dabei verhält sich der magnetische Fluß direkt proportional zur indizierten Spannung und steuert die Drehung des Drehmagneten 41 und über die Hohlwelle 24 auch des Statorinnenteils 21, wodurch die Geometrie des Steuerluftspalts 23 und damit der magnetische Widerstand im Stator 11 verändert wird. Das Ergebnis ist eine einfache, vom Leistungsfaktor cos ϕ unabhängige Regelung der Klemmenspannung des Generators.

## Patentansprüche

1. Stromerzeugereinheit aus Dieselmotor und Synchrongenerator mit einer stationären Ankerwicklung (28) und im Rotor (29) angeordneten Dauermagneten (35) zum Erregen des Generators, wobei dessen Rotor (29) als Außenläufer ausgebildet ist und wobei
der Rotor (29) an einem Lüfterrad (2) angebaut ist, welches seinerseits stirnseitig an der Kurbelwelle (1) des Antriebsmotors angeflanscht ist und wobei der innerhalb des Rotors angeordnete
Stator (11) als geblechtes Eisenpaket ausgebildet ist, welches die Ankerwicklung (28) trägt und mittels durch Bohrungen in seinem Blechpaket geführter, das Blechpaket zusammenspannender Statorschrauben (17) mit einem Innenring (10) eines abflußseitig vorgesehenen Generatorgehäusedeckels (9) mehrfach am Umfang verschraubt ist,
**dadurch gekennzeichnet**
**daß** der Rotor (29) als geblechtes Eisenpaket ausgebildet ist, welches das Schwungrad des Dieselmotors ersetzt und
welches die Dauermagneten (35) zur Erzeugung eines rotierenden Magnetfelds trägt und mittels durch Bohrungen in seinem Blechpaket geführter, das Blechpaket zusammenspannender Spannschrauben (30) mit dem Lüfterrad (2) mehrfach am Umfang verschraubt ist.

2. Stromerzeugereinheit nach Anspruch 1, **dadurch gekennzeichnet,**
**daß** die Spannschrauben (30) mit dem Lüfterrad (2) innerhalb dessen die Beschaufelung (4) tragenden Ringteils verschraubt sind.

3. Stromerzeugereinheit nach Anspruch 1,
**dadurch gekennzeichnet,**
**daß** dicht innerhalb des Zylindermantels des Generatorgehäuses (8) mehrere am Umfang verteilt angeordnete, die gesamte Gehäuselänge durchspannende Befestigungsschrauben (7) vorgesehen sind, welche einerseits mit einem motorseitigen Anschlußgehäuse (5), andererseits mit dem Generatorgehäusedeckel (9) verschraubt sind.

4. Stromerzeugereinheit nach Anspruch 3,
**dadurch gekennzeichnet,**
**daß** das Generatorgehäuse (8) aus Blech gefertigt ist und mit beiden Stirnflächen planflächig zwischen Anschlußgehäuse (5) und Generatorgehäusedeckel (9) eingespannt ist.

5. Stromerzeugereinheit nach Anspruch 1,
**dadurch gekennzeichnet,**
**daß** die Statorschrauben (17) zwischen Stator-Blechpaket und Innenring (10) durch Distanzhülsen (20) gesteckt und zwischen Innenring (10) und der davon abgewandten Seite des Stators (11) verspannt sind.

6. Stromerzeugereinheit nach Anspruch 1,
**dadurch gekennzeichnet,**
**daß** die Spannschrauben (30) zwischen Rotor-Blechpaket und Lüfterrad (2) durch Stützhülsen (32) gesteckt und zwischen Lüfterrad (2) und der davon abgewandten Seite des Rotors (29) verspannt sind.

## Claims

1. Power generating device consisting of a diesel engine and a synchronous generator with a stationary anchor winding (28) and a permanent magnet (35) located in the rotor (29) for excitation of the generator, whereby the rotor (29) of the same takes the form of an external rotor, and whereby the rotor (29) is constructed onto a ventilation wheel (2), which is in turn flanged onto the facing side of the crankshaft (1) of the drive motor, and whereby the stator (11) located in the rotor takes the form of a sheet metal iron packet, which supports the anchor winding (28), and which is screwed to an inner ring (10) of a generator housing cover (9) envisaged on the drain side several times around its circumference through bores by means of stator screws (17) in the sheet metal packet, holding the sheet metal packet together, **characterised in that** the rotor (29) takes the form of a sheet metal packet, which replaces the flywheel of the diesel engine, and which supports the permanent magnets (35) for generating a rotating magnetic field, and which is affixed to the ventilation wheel (2) several times around the circumference by means of tensioning screws (30) through bores in its sheet metal packet.

2. Power generating device according to Claim 1, **characterised in that** the tensioning screws (30) are screwed into the ventilation wheel (2), inside which the annular components carrying the vanes (4) are affixed.

3. Power generating device according to Claim 1, **characterised in that** several fitting screws (7) are envisaged, distributed around the circumference directly inside the cylinder sleeve of the generator housing (8) and penetrating the entire housing length, which are screwed into a connecting housing (5) on the motor side on the one hand, and into the generator housing cover (9) on the other.

4. Power generating device according to Claim 3, **characterised in that** the generator housing (8) is made of sheet metal and is tensioned level and flush with its two facing surfaces between the connecting housing (5) and the generator housing cover (9).

5. Power generating device according to Claim 1, **characterised in that** the stator screws (17) are inserted between the stator sheet metal packet and the inner ring (10) through distancer sleeves (20) and tensioned between the inner ring (10) and the side of the stator (11) facing away from the same.

6. Power generating device according to Claim 1, **characterised in that** the tensioning screws (30) are inserted between the rotor sheet metal packet and the ventilation wheel (2) through support sleeves (32) and tensioned between the ventilation wheel (2) and the side of the rotor (29) facing away from the same.

## Revendications

1. Unité de production de courant formée d'un moteur diesel et d'un alternateur synchrone qui comporte un enroulement d'induit (28) stationnaire et des aimants permanents (35) disposés dans le rotor (29) pour l'excitation de l'alternateur, le rotor (29) étant conformé en rotor extérieur, le rotor (29) étant monté sur une roue de ventilateur (2) qui, de son côté est flasquée à l'extrémité du vilebrequin (1) du moteur d'entraînement, le stator (11) placé à l'intérieur du rotor étant conformé en paquet de tôles qui supporte l'enroulement d'induit (28) et étant vissé en plusieurs points de sa périphérie à un anneau intérieur (10) d'un capot (9) de carter d'alternateur au moyen de vis de stator (17) qui pénètrent dans des trous du paquet de tôles et maintiennent ledit paquet de tôles, **caractérisée par le fait que** le rotor (29) est conformé en paquet de tôles métalliques qui remplace le volant d'inertie du moteur diesel, porte les aimants permanent (35) pour la production d'un champ magnétique tournant et est vissé en plusieurs points de sa périphérie à la roue de ventilateur (2) au moyen de vis de serrage (30) qui passent dans des trous du paquet de tôles et maintiennent assemblé ledit paquet de tôles.

2. Unité de production de courant selon la revendication 1, **caractérisée par le fait que** les vis de serrage (30) sont vissées dans la roue de ventilateur (2) à l'intérieur de l'élément annulaire qui porte l'aubage (4).

3. Unité de production de courant selon la revendication 1, **caractérisée par le fait qu'**il est prévu à l'intérieur de l'enveloppe cylindrique du carter d'alternateur (8) plusieurs vis de fixation (7) réparties sur le pourtour, qui traversent toute la longueur du carter et qui d'un côté sont vissées à un carter de liaison (5) côté moteur, et de l'autre sont vissées au capot de carter d'alternateur (9).

4. Unité de production de courant selon la revendication 3, **caractérisée par le fait que** le carter d'alternateur (8) est réalisé en tôle et est serré à plat avec ses deux faces frontales entre le carter de liaison (5) et le capot de carter d'alternateur (9).

5. Unité de production de courant selon la revendication 1, **caractérisée par le fait que** les vis de stator (17) entre le paquet de tôles de stator et l'anneau intérieur (10) passent dans des manchons entretoises (20) et sont serrées entre l'anneau intérieur (10) et la face du stator (11) éloignée de celui-ci.

6. Unité de production de courant selon la revendication 1, **caractérisée par le fait que** les vis de serrage (30) entre le paquet de tôles de rotor et la roue de ventilateur (2) passent dans des manchons d'appui (32) et sont serrées entre la roue de ventilateur (2) et la face du rotor (29) éloignée de celle-ci.
